# EUROPEAN PATENT APPLICATION

(11) **EP 4 822 632 A1**
(43) Date of publication of application: **14.10.2026**
(21) Application number: 24907467.5
(22) Date of filing: 18.12.2024
(51) Int. Cl.: G06Q 30/0645

(54) **INFORMATION PROCESSING DEVICE, INFORMATION PROCESSING METHOD, AND PROGRAM**

(30) Priority: 20.12.2023 JP 2023214887
(71) Applicant: Newsedtech Co., Ltd., Tokyo 104-0031 (JP)
(72) Inventor: AWAZU Hamakazu, Tokyo 101-0051 (JP)
(74) Representative: Appleyard Lees IP LLP
(86) International application number: PCT/JP2024/044863
(87) International publication number: WO 2025/135083

(57) **Abstract**

The present invention satisfies the needs of a user who rents a mobile terminal and desires to use the terminal for only a few hours per day. A user terminal 2 is a mobile terminal driven by electric power from a battery, and has installed therein a dedicated application having at least a function of detecting the charge amounts for respective charging cycles and transmitting the amounts to a server 1. A charge amount acquisition unit 51 of the server 1 sequentially acquires, from the user terminal 2, the charge amounts for the respective charging cycles of the battery in the user terminal 2, and stores the charge amounts in a terminal history DB 61. A use fee determination unit 53 of the server 1 acquires, from the terminal history DB 61, the charge amounts in a prescribed period (e.g., one month) for the user terminal 2, and determines a use fee of the user terminal 2 for the prescribed period on the basis of the charge amounts in the prescribed period.

## Description

### TECHNICAL FIELD

The present invention relates to an information processing apparatus, an information processing method, and a program.

### BACKGROUND ART

Conventionally, methods for purchasing a mobile terminal (see, for example, Patent Document 1) include lump-sum purchase, installment contract, rental, and lease. The majority of current contracts are installment contracts and rentals.

### Citation List

### Patent Documents

Patent Document 1: Japanese Unexamined Patent Application Publication No. 2019-201464

### DISCLOSURE OF THE INVENTION

### Problems to be Solved by the Invention

However, when a conventional mobile terminal, including that of Patent Document 1, is used under a rental arrangement, the contract is structured on a monthly or annual basis, resulting in the same price regardless of the amount of time the mobile terminal is used. Accordingly, the need to use a mobile terminal for only a few hours per day has not been satisfied.

The present invention has been made in view of such circumstances, and an object of the present invention is to satisfy the needs of a user who uses a mobile terminal under a rental arrangement to use the mobile terminal for only a few hours per day.

### Means for Solving the Problems

In order to achieve the above object, an information processing apparatus according to one aspect of the present invention includes:
a charge amount acquisition unit configured to acquire, from a target apparatus driven by power from a battery, a charge amount for every charging of the battery in the target apparatus; and
a usage fee determination unit configured to determine a usage fee for the target apparatus for a predetermined period, based on the charge amount of the target apparatus for a predetermined period.

An information processing method and a program according to one aspect of the present invention correspond respectively to a method and a program corresponding to the information processing apparatus according to one aspect of the present invention.

### Effects of the Invention

According to the present invention, it becomes possible to satisfy the needs of a user who uses a mobile terminal under a rental arrangement to use the mobile terminal for only a few hours per day.

### BRIEF DESCRIPTION OF THE DRAWINGS

FIG. 1 is a diagram illustrating an overview of a service that is realized by an information processing system, to which a service provider server according to an embodiment of the information processing apparatus of the present invention is applied;
FIG. 2 is a diagram illustrating an example of a configuration of an information processing system, to which a server according to an embodiment of the information processing apparatus of the present invention is applied;
FIG. 3 is a block diagram illustrating an example of a hardware configuration of the server in the information processing system of FIG. 2;
FIG. 4 is a functional block diagram illustrating an example of a functional configuration of the server of FIG. 3 that constitutes the information processing system of FIG. 2;
FIG. 5 is a diagram illustrating an example of an external configuration of a user terminal and a smartphone cover in a second embodiment of the information processing system, to which a server according to an embodiment of the information processing apparatus of the present invention is applied; and
FIG. 6 is a diagram illustrating a functional configuration of the smartphone cover and the server in the information processing system of the second embodiment in FIG. 5.

### PREFERRED MODE FOR CARRYING OUT THE INVENTION

Embodiments of the present invention will be described below with reference to the drawings.

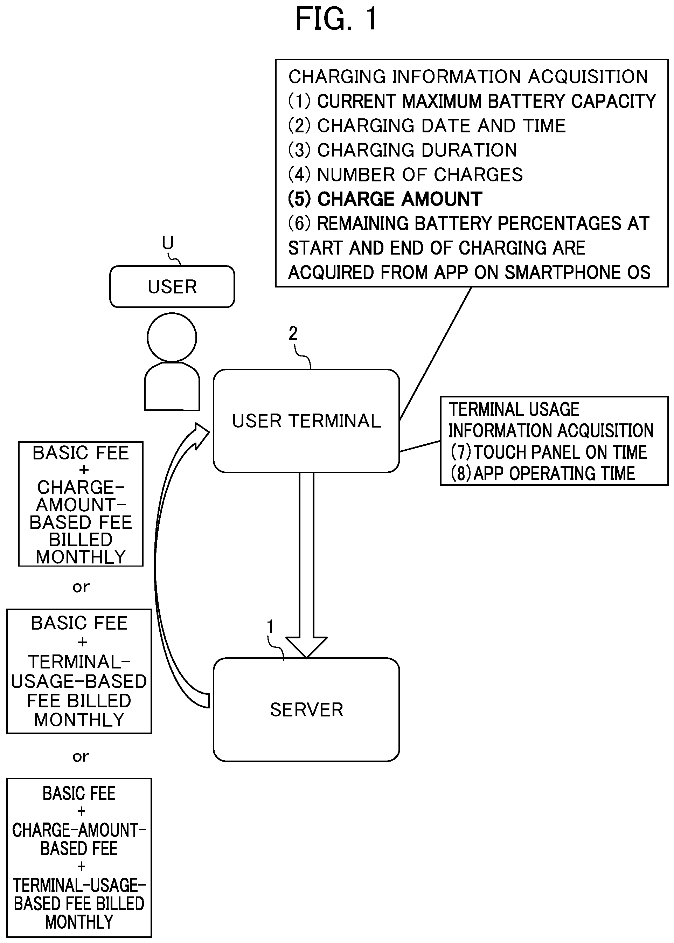

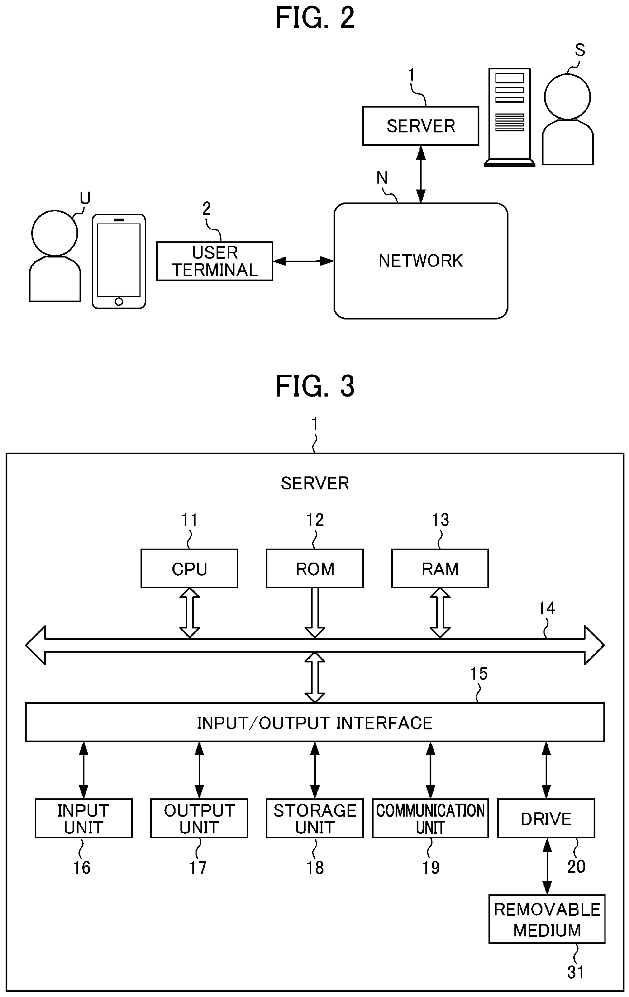

First, with reference to FIG. 1, an overview of a service (hereinafter referred to as "the present service") that is realized by an information processing system (see FIG. 2, described later), to which a server according to an embodiment of the information processing apparatus of the present invention is applied, will be described. FIG. 1 is a diagram illustrating an overview of the present service that is realized by an information processing system, to which a server according to an embodiment of the information processing apparatus of the present invention is applied.

The present service is a service provided to a user U who uses a mobile terminal driven by a battery. The mobile terminal used by the user U is hereinafter referred to as "the user terminal 2".

When using the present service, the user U operates dedicated application software (hereinafter referred to as "dedicated app") installed on the user terminal 2 that enables use of the present service. The user U may also use the present service by accessing a dedicated website (hereinafter referred to as "dedicated site") displayed by the browser function of the user terminal 2 that enables use of the present service. Hereinafter, for convenience of description, when the user U operates the user terminal 2, the description is intended to mean that the user U uses the present service via the dedicated app; however, the following description applies equally to cases in which the dedicated site is used.

In the present service, the user U rents the user terminal 2, on which the dedicated app is installed, from a service provider S of the present service, and uses the rented user terminal 2.

Here, the following first through fourth methods exist as methods for purchasing a mobile terminal. The first method is lump-sum purchase. The first method is adopted by carrier shops, e-commerce retailers, mass merchandisers, and the like. The second method is installment contract. The second method is adopted by carrier shops. The third method is rental. The third method is adopted by carriers, carrier agents, and rental companies. The fourth method is lease. The fourth method is adopted by leasing companies. The majority of current contracts are the second method and the third method. In the case of the conventional rental of the third method, the contract is structured on a monthly or annual basis, resulting in the same price regardless of the amount of time the mobile terminal is used. Accordingly, the need to use a mobile terminal for only a few hours per day has not been satisfied. Upon adopting the rental of the third method, the present service employs a new rental model, in which charges are based on the charge amount of the user terminal 2, in order to satisfy such a need.

Specifically, as illustrated in FIG. 1, the dedicated app of the user terminal 2 sequentially acquires charging information from the OS or the like of the user terminal 2, and provides the charging information to the server 1 managed by the service provider S. Here, the charging information includes: (1) current maximum battery capacity; (2) charging date and time; (3) charging duration; (4) number of charges; (5) charge amount; and (6) remaining battery percentage at the start and end of charging.

As illustrated in FIG. 1, the dedicated app of the user terminal 2 sequentially acquires terminal usage information from the OS or the like of the user terminal 2, and provides the terminal usage information to the server 1 managed by the service provider S. Here, the terminal usage information includes: (7) touch panel ON time; and (8) app operating time.

Based on the charging information sequentially transmitted from the user terminal 2, the server 1 calculates a usage fee (base fee plus charge-amount-based fee) corresponding to the charge amount for a predetermined period (for example, one month), and bills the user U on a monthly basis. Alternatively, based on the terminal usage information sequentially transmitted from the user terminal 2, the server 1 calculates a usage fee (base fee plus terminal-usage-based fee) corresponding to the terminal usage amount for a predetermined period (for example, one month) - that is, a time or amount derived from the touch panel ON time or the app operating time - and bills the user U on a monthly basis. Alternatively, based on the charging information and the terminal usage information sequentially transmitted from the user terminal 2, the server 1 calculates a usage fee (base fee plus charge-amount-based fee plus terminal-usage-based fee) corresponding to the charge amount for a predetermined period (for example, one month) and the terminal usage amount for a predetermined period (for example, one month) - that is, a time or amount derived from the touch panel ON time or the app operating time - and bills the user U on a monthly basis.

Next, with reference to FIG. 2, a configuration of an information processing system that realizes the provision of the present service described above - that is, an information processing system, to which a server according to an embodiment of the information processing apparatus of the present invention is applied - will be described. FIG. 2 is a diagram illustrating an example of a configuration of an information processing system, to which a server according to an embodiment of the information processing apparatus of the present invention is applied.

The information processing system illustrated in FIG. 2 is configured to include the server 1 and the user terminal 2. The server 1 and the user terminal 2 are mutually connected via a network such as the Internet.

The server 1 is an information processing apparatus managed by the service provider S of the present service (FIG. 1). The server 1 executes various processing for realizing the present service while communicating with the user terminal 2 as appropriate.

The user terminal 2 is a mobile terminal operated by the user U, and is constituted by a smartphone, a tablet, or the like. The user terminal 2 has the dedicated app for using the present service installed thereon.

FIG. 3 is a block diagram illustrating an example of a hardware configuration of the server in the information processing system illustrated in FIG. 2.

The server 1 includes a CPU (Central Processing Unit) 11, ROM (Read Only Memory) 12, RAM (Random Access Memory) 13, a bus 14, an input/output interface 15, an input unit 16, an output unit 17, a storage unit 18, a communication unit 19, and a drive 20.

The CPU 11 executes various processing in accordance with a program recorded in the ROM 12 or a program loaded from the storage unit 18 into the RAM 13. The RAM 13 also stores, as appropriate, data and the like necessary for the CPU 11 to execute various processing.

The CPU 11, the ROM 12, and the RAM 13 are mutually connected via the bus 14. The input/output interface 15 is also connected to the bus 14. The input unit 16, the output unit 17, the storage unit 18, the communication unit 19, and the drive 20 are connected to the input/output interface 15.

The input unit 16 is constituted by, for example, a keyboard or the like, and inputs various information. The output unit 17 is constituted by a display such as a liquid crystal display, a speaker, or the like, and outputs various information as images or audio. The storage unit 18 is constituted by a DRAM (Dynamic Random Access Memory) or the like, and stores various data. The communication unit 19 communicates with other apparatuses (for example, the user terminal 2 of FIG. 2) via a network N including the Internet.

A removable medium 31 including a magnetic disk, an optical disk, a magneto-optical disk, a semiconductor memory, or the like is loaded into the drive 20 as appropriate. A program read from the removable medium 31 by the drive 20 is installed into the storage unit 18 as necessary. The removable medium 31 is also capable of storing various data stored in the storage unit 18 in the same manner as the storage unit 18.

Although not illustrated, the user terminal 2 of FIG. 2 may also have a hardware configuration basically similar to the hardware configuration illustrated in FIG. 3. Accordingly, a description of the hardware configuration of the user terminal 2 is omitted. In the user terminal 2, a touch panel is constituted by a portion of the input unit 16 and a portion of the output unit 17.

Through cooperation of various hardware and various software that constitute the information processing system of FIG. 2 including the server 1 and the user terminal 2 of FIG. 3, various processing for providing the present service of FIG. 1 can be executed.

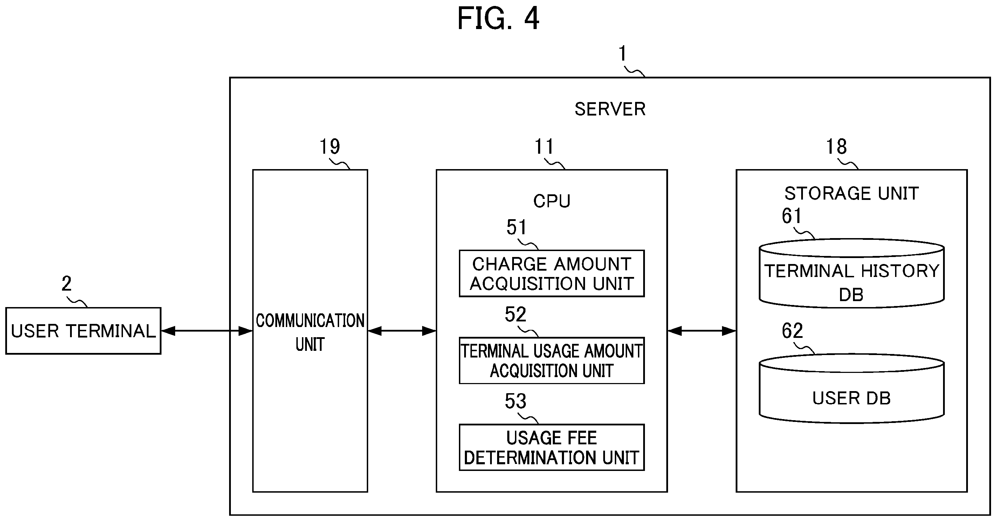

FIG. 4 is a functional block diagram illustrating an example of a functional configuration of the server of FIG. 3 in the information processing system of FIG. 2.

As illustrated in FIG. 4, a charge amount acquisition unit 51, a terminal usage amount acquisition unit 52, and a usage fee determination unit 53 function in the CPU 11 of the server 1. A terminal history DB 61 and a user DB 62 are provided in one area of the storage unit 18.

The user terminal 2 is a mobile terminal driven by power from a battery and having a touch panel, and has installed thereon a dedicated app having at least a function of detecting a charge amount for every charging and transmitting the charge amount to the server 1.

The charge amount acquisition unit 51 of the server 1 sequentially acquires, from the user terminal 2, the charge amount for every charging of the battery in the user terminal 2, and stores the charge amount in the terminal history DB 61.

The terminal usage amount acquisition unit 52 of the server 1 sequentially acquires, from the user terminal 2, the usage amount of the user terminal 2 - that is, a time or amount derived from the touch panel ON time or the app operating time - and stores the usage amount in the terminal history DB 61. The terminal history DB 61 sequentially accumulates the charge amount and usage amount for every charging acquired from the user terminal 2. Information in the terminal history DB 61 is read out by the usage fee determination unit 53 as necessary.

The usage fee determination unit 53 of the server 1 acquires, from the terminal history DB 61, the charge amount of the user terminal 2 for a predetermined period (for example, one month), and determines the usage fee for the user terminal 2 for the predetermined period, based on the charge amount for the predetermined period. Specifically, for example, the usage fee determination unit 53 determines, as the usage fee for the user terminal 2 for the predetermined period, a fee obtained by adding a variable fee corresponding to the charge amount for the predetermined period to the basic usage fee for the predetermined period (for example, one month). Various information relating to the user terminal 2 and the user U, such as the basic usage fee for the predetermined period, is stored in the user DB 62. Alternatively, the usage fee determination unit 53 of the server 1 acquires, from the terminal history DB 61, the terminal usage amount of the user terminal 2 for a predetermined period (for example, one month) - that is, a time or amount derived from the touch panel ON time or the app operating time - and determines the usage fee for the user terminal 2 for the predetermined period, based on the terminal usage amount for the predetermined period. Alternatively, the usage fee determination unit 53 of the server 1 acquires, from the terminal history DB 61, the charge amount and the terminal usage amount - that is, a time or amount derived from the touch panel ON time or the app operating time - of the user terminal 2 for a predetermined period (for example, one month), respectively, and determines the usage fee for the user terminal 2 for the predetermined period, based on the charge amount and the terminal usage amount for the predetermined period. By configuring in this manner, the usage fee for the user terminal 2 for the predetermined period determined by the usage fee determination unit 53 is charged to the user U as a rental fee for each predetermined period.

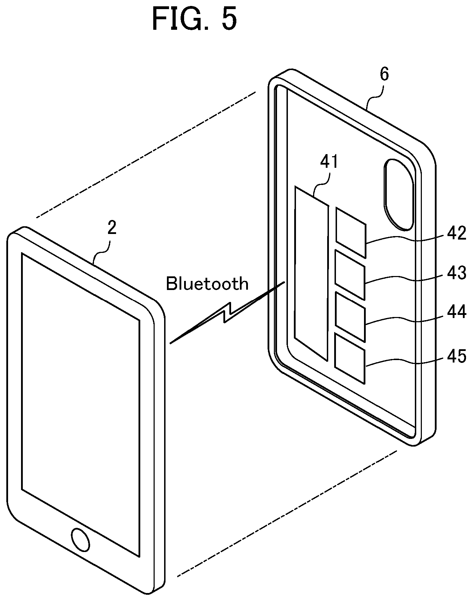

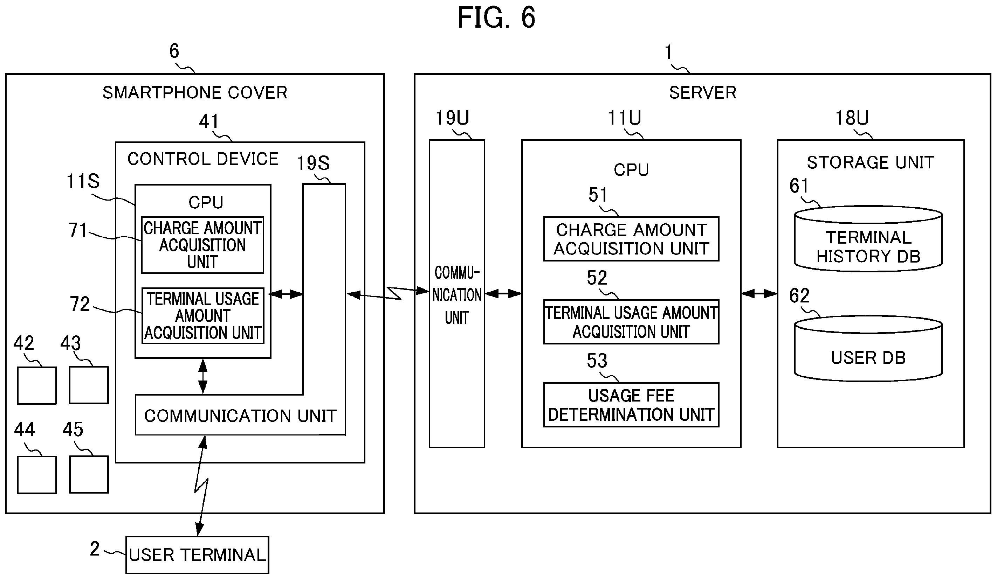

Next, with reference to FIGS. 5 and 6, a second embodiment of an information processing system, to which a server of an information processing apparatus according to an embodiment of the information processing apparatus of the present invention is applied, will be described. FIG. 5 is a diagram illustrating an example of an external configuration of a user terminal and a smartphone cover in the second embodiment of the information processing system, to which a server according to an embodiment of the information processing apparatus of the present invention is applied. FIG. 6 is a diagram illustrating a functional configuration of the smartphone cover and the server in the information processing system of the second embodiment in FIG. 5.

In the above embodiment, an example of the server 1 and the user terminal 2 has been described as an example of an apparatus that determines the usage fee (amount to be charged) for the user terminal 2 for a predetermined period, based on the charge amount and usage amount of the user terminal 2 acquired from the user terminal 2; however, the second embodiment further includes a protective case 6 for a smartphone (hereinafter referred to as "smartphone cover 6"), as illustrated in FIG. 5.

That is, in the second embodiment, when the user terminal 2 is, for example, a smartphone or the like, the smartphone cover 6 is detachably mounted on the user terminal 2 as a smartphone, as illustrated in FIG. 5. A plurality of sensors, including an acceleration sensor 42, a temperature sensor 43, a GPS sensor 44, and other sensors 45, each operating by vibration power generation, are embedded in the smartphone cover 6. Alternatively, a plurality of sensors may be embedded in a sticker, which is then attached to the user terminal 2 or the smartphone cover 6.

If the user terminal 2 falls while the smartphone cover 6 or the sticker is mounted on the user terminal 2, the acceleration sensor 42 detects the fall of the user terminal 2, executes wireless communication with the user terminal 2 via Bluetooth (registered trademark) or the like, and notifies the user terminal 2 of the fall detection. If an abnormal temperature condition of the user terminal 2 (such as so-called smartphone heatstroke or smartphone hypothermia) occurs while the smartphone cover 6 or the sticker is mounted on the user terminal 2, the temperature sensor 43 detects the abnormal temperature condition of the user terminal 2, executes wireless communication with the user terminal 2 via Bluetooth (registered trademark) or the like, and notifies the user terminal 2 of the abnormal temperature condition. If a lost state of the user terminal 2 occurs while the smartphone cover 6 or the sticker is mounted on the user terminal 2, the GPS sensor 44 detects the lost state, based on the current position of the user terminal 2, executes wireless communication with the user terminal 2 via Bluetooth (registered trademark) or the like, and notifies the user terminal 2 or a predetermined terminal set in advance as a notification destination of the lost state. If the user terminal 2 enters a predetermined state while the smartphone cover 6 or the sticker is mounted on the user terminal 2, the other sensors 45 detect the predetermined state, execute wireless communication with the user terminal 2 via Bluetooth (registered trademark) or the like, and notify the user terminal 2 of the predetermined state. The user terminal 2 manages various notified states such as fall detection and provides notifications (alerts) to the user.

In the present embodiment, the management of various notified states such as notified fall detection and notifications (alerts) to the user are provided as functions of dedicated application software (hereinafter referred to as "dedicated app") installed on the user terminal 2 that enables use of the present service. However, the functions may also be made available by accessing a dedicated website (hereinafter referred to as "dedicated site") displayed by the browser function of the user terminal 2.

The smartphone cover 6 includes a control device 41 in addition to the sensors illustrated in FIG. 5 (the acceleration sensor 2, the temperature sensor 3, the GPS sensor 4, the other sensors 5, and the like).

As illustrated in FIG. 6, the control device 41 is disposed in the smartphone cover 6 that is mountable on the user terminal 2, and is a dedicated device detachably attached to the user terminal 2. The control device 41 executes control to transmit, to the server 1 via, for example, Bluetooth or the like (a predetermined wireless scheme), detection results detected by each of the plurality of sensors 42 through 45 via Bluetooth communication with the user terminal 2. Specifically, the charge amount (remaining charge amount and the like) and usage amount (time or amount) of the user terminal 2 are notified to the control device 41 through communication between the control device 41 and the user terminal 2, and the control device 41 has a function of transmitting the notified information to the server 1. That is, the control device 41 can be regarded to have at least a function of acquiring the charge amount and usage amount of the user terminal 2, and transmitting the charge amount and usage amount to the server 1.

The control device 41 includes hardware similar to that of the server 1 illustrated in FIG. 3. In order to distinguish the hardware configuration of the control device 41 from the hardware configuration of the server 1, the hardware configuration of the control device 41 is hereinafter referred to using designations such as a CPU 11S and a communication unit 19S, and the hardware configuration of the server 1 is designated by appending "U" after each reference numeral, specifically a CPU 11U, a communication unit 19U, a storage unit 18U, and the like.

The CPU 11S of the control device 41 functions as a charge amount acquisition unit 71 and a terminal usage amount acquisition unit 72 when executing processing.

The charge amount acquisition unit 71 has at least a function of acquiring the charge amount of the user terminal 2 and transmitting the charge amount to the server 1. The charge amount acquisition unit 71 acquires the current (at the present moment) remaining charge amount of the user terminal 2 through periodic communication with the user terminal 2 (for example, communication at intervals of five minutes or ten minutes).

The terminal usage amount acquisition unit 72 acquires the usage amount of the user terminal 2 via the control device 41 that has at least a function of acquiring the usage amount of the user terminal 2 and transmitting the usage amount to the server 1. The terminal usage amount acquisition unit 72 acquires the current (at the present moment) usage amount of the user terminal 2 through periodic communication with the user terminal 2 (for example, communication at intervals of five minutes or ten minutes).

The control device 41, including the charge amount acquisition unit 71 and the terminal usage amount acquisition unit 72, executes control to transmit, to the server 1 via, for example, Bluetooth or the like (a predetermined wireless scheme), information acquired from the user terminal 2 through Bluetooth communication with the user terminal 2 and detection results detected by each of the plurality of sensors 2 through 5. The wireless scheme may be, for example, wireless LAN or the like in addition to Bluetooth, and any wireless scheme is sufficient.

In a case where the smartphone cover 6 mounted on the user terminal 2 mediates information of the user terminal 2 for acquisition by the server 1, as in the present example, the charge amount acquisition unit 51 of the server 1 acquires the charge amount of the user terminal 2 via the control device 41 that has at least a function of acquiring the charge amount of the user terminal 2 and transmitting the charge amount to the server 1. Similarly, in a case where the smartphone cover 6 mediates information of the user terminal 2 for acquisition by the server 1, the terminal usage amount acquisition unit 52 of the server 1 acquires the usage amount of the user terminal 2 via the control device 41 that has at least a function of acquiring the usage amount of the user terminal 2 and transmitting the usage amount to the server 1.

The operation of the present information processing system will be described below by way of specific examples. The first example is a case in which, as degradation of the battery of the user terminal 2 progresses, the server 1 calculates a billed amount, based on the degree of increase in the remaining charge amount of the user terminal 2 and the charging duration, and bills the user accordingly.

In the first example, it is assumed that the remaining charge amount of the user terminal 2 is sequentially acquired by the server 1 as follows. For example, a remaining charge amount of 50% is acquired at 22:00 on November 22, 2024. Thereafter, a remaining charge amount of 20% is acquired at 23:00 on November 22, 2024. At this point, charging commences, and a remaining charge amount of 100% is acquired at 23:30 on November 22, 2024, at which point charging ends, and a charge amount of 80% is charged from a remaining charge amount of 20% to 100%. In this case, the server 1 accumulates on a monthly basis the charge amount of 80%, which represents the increase from the lowest remaining charge amount of 20%, and calculates the charge-based billing amount using the formula: charge amount (%) × 10 yen (a provisional value for illustrative purposes), and bills the user (customer) accordingly.

The second example is a case in which the server 1 predicts, based on the SOH (State of Health) value indicating the degree of battery degradation, that further battery degradation will result in an increase in the billed amount, and issues a recommendation to the customer regarding battery replacement. It shall be assumed that the current remaining battery charge is, for example, 80%, and that the remaining charge decreases to 70% one hour later; it shall further be assumed that the time at that point is, for example, 5:30, the remaining charge at that point is 70%, and charging commences from 5:30. When charging from 70% to 100%, a charge amount of 30%, which is the difference, is charged. Adding the charge amount to the already accumulated total charge amount results in a monthly billed amount of, for example, 200% or 1,500% × 1% × 10 yen. For example, assume that in the current month, the user terminal was used for 2,000 hours and charged by 2,000%. In the following month, 300% was used. Since 3,000% represents a greater charge amount, the billed amount is naturally larger. In cases of 3,000% or 2,000%, the 3,000% can be regarded to contribute more to battery degradation. In general, charging to 100% a total of 500 times results in the SOH value indicating the degree of battery degradation decreasing from 100% to 80% after 500 charging cycles. SOH is an abbreviation for State of Health, and is an index representing the degree of health or degradation. SOH represents the ratio of the full charge capacity (Ah) at the time of degradation to the initial full charge capacity (Ah), with the initial full charge capacity set at 100%. For example, an SOH of 50% indicates that the battery holds only half the initial capacity even when fully charged. With 500 cycles × 100% = 50,000%, the SOH of the battery reaches 80% after a total charge amount of 50,000%. That is, it can be estimated that a total charge amount of 50,000% results in a 20% decrease in the degree of battery degradation. If the SOH decreases by, for example, 10%, a linear proportional calculation indicates that a charge amount of 25,000% corresponds to the decrease. Since the degree of battery degradation of the user terminal is measured and collected by the OS of the user terminal, the difference can be calculated by matching the data measured by the OS of the user terminal against the estimated data described above. By comparing the difference versus the actual values and deriving a so-called quadratic curve, the SOH degradation curve for the battery of the user's terminal can be obtained. For example, it shall be assumed that the cumulative charge amount of a certain user's battery is XX%, and the current SOH is 85%. If a further 10,000% is consumed in the coming year alone, the SOH will fall below 80% when the remaining battery charge reaches 70%. In this case, the server 1 outputs to the user terminal 2 an alert including a recommendation such as: "The SOH has now fallen below 80%. Would you like to replace the battery? Alternatively, would you like to switch to a different model?"

The third example is a case in which the server 1 predicts, based on the degree of increase in the charge amount from the lowest remaining charge amount and the charging duration, a trend of increasing billed amounts as battery degradation progresses, and issues a recommendation to the customer regarding battery replacement.

When providing a service that charges the user terminal 2 such as a smartphone based on charge amount, it is assumed that, prior to battery degradation, using the terminal for approximately five hours during the day reduces the remaining battery charge to approximately 80%. In this case, it is sufficient to charge the terminal by 20% over approximately two hours at night when the terminal is not in use. On the other hand, assume that, as degradation of the battery of the user terminal 2 progresses, using the user terminal 2 for approximately five hours during the day causes the remaining battery charge to decrease to approximately 20%. In this case, it becomes necessary to charge the battery by 80% every five hours. Expressed in terms of period, charging that previously required, for example, one month to accumulate 100 hours of charge prior to battery degradation reaches 100 hours in approximately seven days following battery degradation. When 100 hours of charging becomes necessary within one week, the billed amount increases correspondingly in proportion to the charge amount. As battery degradation progresses, it becomes necessary to charge the battery more frequently within the same period compared to prior to battery degradation, resulting in a progressively increasing billed amount. If usage continues in the same manner, it can be predicted that the battery will need to be charged four times as much per month compared to prior to degradation. Accordingly, the server 1 outputs to the user terminal 2 of the user a recommendation to the effect that: since the charge-based billing amount will reach approximately such a level at the next billing (payment), the user may wish to consider replacing the battery at this point.

As described above, according to each example, by acquiring the remaining charge amount of the user terminal 2, calculating the billed amount based on the difference before and after charging, and presenting a trend of increasing future billed amounts to issue a recommendation encouraging battery replacement or a model change, the user is able to appropriately determine the timing for battery replacement, terminal model change, and the like.

Although one embodiment of the present invention has been described above, the present invention is not limited to the above-described embodiment, and modifications, improvements, and the like within a scope that can achieve the object of the present invention are considered to be included in the present invention.

For example, the system configuration illustrated in FIG. 2 and the hardware configuration of the server 1 illustrated in FIG. 3 are merely illustrative for the purpose of achieving the object of the present invention, and are not particularly limited.

The functional block diagram illustrated in FIG. 4 is merely illustrative and is not particularly limited. That is, it is sufficient that the information processing system of FIG. 2 is provided with a function capable of executing all of the various processing described above as a whole, and which functional blocks and databases should be used to realize the function are not particularly limited to the example of FIG. 5.

The locations of the functional blocks and databases are also not limited to those of FIG. 4, and may be determined arbitrarily. For example, at least a portion of the functional blocks and databases disposed on the server 1 side may be configured to be included in another information processing apparatus.

The series of processing described above may be executed by hardware or by software. A single functional block may be constituted by hardware alone, by software alone, or by a combination thereof.

When the series of processing is executed by software, a program constituting the software is installed into a computer or the like from a network or a recording medium. The computer may be a computer incorporated into dedicated hardware. The computer may be a computer capable of executing various functions by installing various programs, such as a server, a general-purpose smartphone, or a personal computer.

A recording medium including such a program is constituted not only by a removable medium (not illustrated) that is distributed separately from the apparatus main body in order to provide the program to the user, but also by a recording medium or the like that is provided to the user in a state of being pre-incorporated in the apparatus main body.

In the present specification, steps describing a program recorded on a recording medium include not only processing executed in chronological order in accordance with the described sequence, but also processing executed in parallel or individually even if not necessarily executed in chronological order.

To summarize the foregoing, it is sufficient for an information processing apparatus, to which the present invention is applied, to have the following configuration, and the information processing apparatus may take various forms of embodiment. That is, it is sufficient for an information processing apparatus, to which the present invention is applied (for example, the server 1 of FIGS. 2 through 4), to include:
a charge amount acquisition unit (for example, the charge amount acquisition unit 51 of FIG. 4) configured to acquire, from a target apparatus (for example, the user terminal 2 of FIGS. 1 through 4) driven by power from a battery, a charge amount for every charging of the battery in the target apparatus (for example, (5) charge amount among the charging information of FIG. 1); and
a usage fee determination unit (for example, the usage fee determination unit 53 of FIG. 4) configured to determine a usage fee for the target apparatus for a predetermined period (for example, one month), based on the charge amount of the target apparatus for the predetermined period.

This makes it possible to satisfy the needs of a user who uses a mobile terminal (target apparatus) under a rental arrangement to use the mobile terminal for only a few hours per day.

The usage fee determination unit can determine, as the usage fee for the target apparatus for the predetermined period, a fee obtained by adding a variable fee corresponding to the charge amount for the predetermined period to the basic usage fee for the predetermined period (for example, basic fee plus charge-amount-based fee of FIG. 1).

Application software (for example, the dedicated app described above) having at least a function of detecting the charge amount for every charging and transmitting the charge amount to the information processing apparatus can be installed on the target apparatus.

The charge amount acquisition unit (for example, the charge amount acquisition unit 71 of FIG. 6) can acquire the charge amount of the target apparatus (for example, the user terminal 2 of FIG. 6) via a control device (for example, the control device 41 of FIG. 6) that is disposed in a member (for example, the smartphone cover 6 of FIG. 5) mountable on the target apparatus (for example, the user terminal 2 of FIG. 6) and has at least a function of acquiring the charge amount of the target apparatus (for example, the user terminal 2 of FIG. 6) and transmitting the charge amount to the information processing apparatus (for example, the server 1 of FIG. 6).

Alternatively, it is sufficient for an information processing apparatus, to which the present invention is applied (for example, the server 1 of FIGS. 2 through 4), to include:
a target apparatus usage amount acquisition unit (for example, the terminal usage amount acquisition unit 52 of FIG. 4) configured to acquire, from a target apparatus (for example, the user terminal 2 of FIGS. 1 through 4) driven by power from a battery, a usage amount of the target apparatus (for example, (7) touch panel ON time or (8) app operating time among the terminal usage information of FIG. 1); and
a usage fee determination unit (for example, the usage fee determination unit 53 of FIG. 4) configured to determine a usage fee for the target apparatus for a predetermined period (for example, one month), based on the usage amount of the target apparatus for the predetermined period.

This makes it possible to satisfy the needs of a user who uses a mobile terminal under a rental arrangement to use the mobile terminal for only a few hours per day.

The usage fee determination unit can determine, as the usage fee for the target apparatus for the predetermined period, a fee obtained by adding a variable fee corresponding to the terminal usage amount for the predetermined period to the basic usage fee for the predetermined period (for example, basic fee plus terminal-usage-based fee of FIG. 1).

Application software (for example, the dedicated app described above) having at least a function of detecting the usage amount of the target apparatus (for example, (7) touch panel ON time or (8) app operating time among the terminal usage information of FIG. 1) and transmitting the usage amount to the information processing apparatus can be installed on the target apparatus.

The usage amount acquisition unit (for example, the terminal usage amount acquisition unit 52 of FIG. 6) can acquire the usage amount of the target apparatus (for example, the user terminal 2 of FIG. 6) via a control device (for example, the control device 41 of FIG. 6) that is disposed in a member (for example, the smartphone cover 6 of FIG. 5) mountable on the target apparatus (for example, the user terminal 2 of FIG. 6) and has at least a function of acquiring the usage amount of the target apparatus (for example, the user terminal 2 of FIG. 6) and transmitting the usage amount to the information processing apparatus (for example, the server 1 of FIG. 6).

### EXPLANATION OF REFERENCE NUMERALS

- 1:: server
- 2:: user terminal
- 11:: CPU
- 12:: ROM
- 13:: RAM
- 14:: bus
- 15:: input/output interface
- 16:: input unit
- 17:: output unit
- 18:: storage unit
- 19:: communication unit
- 20:: drive
- 30:: removable medium
- 51:: charge amount acquisition unit
- 52:: terminal usage amount acquisition unit
- 53:: usage fee determination unit

## Claims

1. An information processing apparatus, comprising:
a charge amount acquisition unit configured to acquire, from a target apparatus driven by power from a battery, a charge amount for every charging of the battery in the target apparatus; and
a usage fee determination unit configured to determine a usage fee for the target apparatus for a predetermined period, based on the charge amount of the target apparatus for the predetermined period.

2. The information processing apparatus according to claim 1, wherein the usage fee determination unit is configured to determine, as the usage fee for the target apparatus for the predetermined period, a fee obtained by adding a variable fee corresponding to the charge amount for the predetermined period to a basic usage fee for the predetermined period.

3. The information processing apparatus according to claim 1, wherein application software having at least a function of detecting the charge amount for every charging and transmitting the charge amount to the information processing apparatus is installed on the target apparatus.

4. The information processing apparatus according to claim 1, wherein the charge amount acquisition unit is configured to acquire the charge amount of the target apparatus via a control device that is disposed in a member mountable on the target apparatus and has at least a function of acquiring the charge amount of the target apparatus and transmitting the charge amount to the information processing apparatus.

5. An information processing method executed by an information processing apparatus, the information processing method comprising:
a charge amount acquisition step of acquiring, from a target apparatus driven by power from a battery, a charge amount for every charging of the battery in the target apparatus; and
a usage fee determination step of determining a usage fee for the target apparatus for a predetermined period, based on the charge amount of the target apparatus for the predetermined period.

6. A program causing a computer to execute control processing comprising:
a charge amount acquisition step of acquiring, from a target apparatus driven by power from a battery, a charge amount for every charging of the battery in the target apparatus; and
a usage fee determination step of determining a usage fee for the target apparatus for a predetermined period, based on the charge amount of the target apparatus for the predetermined period.

7. An information processing apparatus comprising:
a target apparatus usage amount acquisition unit configured to acquire, from a target apparatus driven by power from a battery, a usage amount of the target apparatus; and
a usage fee determination unit configured to determine a usage fee for the target apparatus for a predetermined period, based on the usage amount of the target apparatus.

8. The information processing apparatus according to claim 6, wherein the usage fee determination unit is configured to determine, as the usage fee for the target apparatus for the predetermined period, a fee obtained by adding a variable fee corresponding to the usage amount of the target apparatus for the predetermined period to a basic usage fee for the predetermined period.

9. The information processing apparatus according to claim 6, wherein application software having at least a function of detecting the usage amount of the target apparatus and transmitting the usage amount to the information processing apparatus is installed on the target apparatus.

10. The information processing apparatus according to claim 7, wherein the usage amount acquisition unit is configured to acquire the usage amount of the target apparatus via a control device that is disposed in a member mountable on the target apparatus and has at least a function of acquiring the usage amount of the target apparatus and transmitting the usage amount to the information processing apparatus.

11. An information processing method executed by an information processing apparatus, the information processing method comprising:
a charge amount acquisition step of acquiring, from a target apparatus driven by power from a battery, a usage amount of the target apparatus; and
a usage fee determination step of determining a usage fee for the target apparatus for a predetermined period, based on the usage amount of the target apparatus for the predetermined period.

12. A program causing a computer to execute control processing comprising:
a charge amount acquisition step of acquiring, from a target apparatus driven by power from a battery, a usage amount of the target apparatus; and
a usage fee determination step of determining a usage fee for the target apparatus for a predetermined period, based on the usage amount of the target apparatus for the predetermined period.
